# EUROPÄISCHE PATENTANMELDUNG

(11) **EP 0 872 383 A2**
(43) Veröffentlichungstag der Anmeldung: **21.10.1998**
(21) Anmeldenummer: 98102390.6
(22) Anmeldetag: 12.02.1998
(51) Int. Cl.: B60R 13/02

(54) **Aus zumindest einer Trägerschicht, einer Haptik-Zwischenschicht sowie einer Dekorschicht bestehendes Fahrzeug-Innenausstattungsteil**

(30) Priorität: 03.03.1997 DE 19708486
(71) Anmelder: Bayerische Motoren Werke Aktiengesellschaft, 80788 München (DE)
(72) Erfinder: Ulrich, Josef, 86570 Inchenhofen (DE)

(57) **Zusammenfassung**

Aus zumindest einer Trägerschicht, einer Haptik-Zwischenschicht sowie einer Dekorschicht bestehendes Fahrzeug-Innenausstattungsteil, welches durch Hinterpressen oder Hinterprägen in einem einzigen Arbeitsgang hergestellt wird, wobei die Trägerschicht aus einem Naturfaser-Thermoplast-Verbund besteht und die Dekorschicht durch Leder oder durch einen Lederersatzstoff oder durch Alcantara gebildet ist. Die Haptik-Zwischenschicht kann durch einen Polypropylen- oder Polyäthylen-Schaum in Form von Plattenware oder Rollenware oder durch ein PET/PP-Vlies gebildet sein.

## Beschreibung

Die Erfindung betrifft ein aus zumindest einer Trägerschicht, einer Haptik-Zwischenschicht sowie einer Dekorschicht bestehendes Fahrzeug-Innenausstattungsteil, welches durch Hinterpressen oder Hinterprägen in einem im wesentlichen einzigen Arbeitsgang hergestellt wird. Zum technischen Umfeld wird beispielshalber auf die DE 37 22 873 A1 verwiesen.

In der eben genannten Schrift ist ein besonders einfaches und dennoch qualitativ hochwertige Ergebnisse lieferndes Verfahren zur Herstellung beispielsweise eines Fahrzeug-Innenausstattungsteiles beschrieben. Als Trägerschicht kommt in dieser Schrift ein Polypropylen enthaltendes Faservlies zum Einsatz, wobei es sich bei diesem Faservlies vorzugsweise um ein Recyclingmaterial handelt. Über das Dekormaterial bzw. über die Deckschicht werden in der genannten Schrift keine Angaben gemacht, jedoch ist hierbei davon auszugehen, daß es sich wie in der bisherigen Hinterpreßtechnik üblich (vgl. beispielsweise EP 0 376 262 A2) um ein geeignetes Kunststoffmaterial handelt.

Ausgehend von diesem bekannten Stand der Technik sollen mit der vorliegenden Erfindung weitere mögliche Materialien für die Dekorschicht sowie für die Trägerschicht aufgezeigt werden, die sich einerseits durch besondere Umweltfreundlichkeit und andererseits durch ein angenehmes Erscheinungsbild auszeichnen.

Die Lösung dieser Aufgabe ist dadurch gekennzeichnet, daß die Trägerschicht aus einem Naturfaser-Thermoplast-Verbund besteht und die Dekorschicht durch Leder oder durch einen Lederersatzstoff oder durch Alcantara gebildet ist.

Erfindungsgemäß wird als Material für die Trägerschicht ein Naturfaser-Thermoplast-Verbund vorgeschlagen. Als Grundstoff für die Naturfasern kann bevorzugt insbesondere Hanf zum Einsatz kommen. Hanf ist insofern besonders vorteilhaft, als bereits 6 Monate nach der Aussaat eines Hanf-Samenkornes die Pflanze geerntet und geröstet werden kann. Anschließend ist es auf einfache Weise möglich, die Naturfasern durch Aufschluß zu gewinnen. Zusammen mit Thermoplastfasern können diese Naturfasern zu einer sog. Naturfaser-Thermoplast-Matte gelegt und gewirkt werden. Diese Naturfaser-Thermoplast-Matte kann dann beschnitten und weiterverarbeitet werden wie in der oben genannten DE 37 22 873 C2 für das dort verwendete Faservlies angegeben.
Von besonderem Vorteil ist die sich mit dem Naturfaser-Thermoplast-Verbund einstellende Gewichtsreduzierung von bis zu 20 % gegenüber herkömmlichen Materialien für die Trägerschicht. Dabei zeichnet sich dieses Material durch eine besonders gute Recyclingfähigkeit aus, wobei anzumerken ist, daß selbst dann, wenn ein Naturfaser-Thermoplast-Verbund verbrannt werden sollte, die zusätzliche Kohlendioxid-Abgabe in die Atmosphäre nur gering ist, da die Hanfpflanze zuvor ja bereits das entsprechende Kohlendioxid aufgenommen hatte.

Es sei noch darauf hingewiesen, daß neben Hanf auch andere Naturfasern für den erfindungsgemäßen Naturfaser-Thermoplast-Verbund verwendet werden können, so beispielsweise Flachs, Sisal, Jute, o.ä.

Erfindungsgemäß wird weiterhin für die Dekorschicht Leder, ein Lederersatzstoff oder Alcantara vorgeschlagen. Auch bei diesen Materialien handelt es sich um durchweg natürliche Materialien, die sich einerseits durch gute Recyclingfähigkeit und andererseits durch ein dem heutigen Zeitgeist entsprechendes natürliches Erscheinungsbild auszeichnen. Dabei sei ausdrücklich darauf hingewiesen, daß bis zum heutigen Zeitpunkt nach derzeitigem Kenntnisstand noch nie daran gedacht wurde, Leder, Lederersatzstoffe oder Alcantara mit Thermoplast-Verbundmaterialien zu hinterpressen bzw. zu hinterprägen. Nach dem bisherigen Stand der Technik wurde Leder bzw. ein Lederersatzstoff lediglich mit einem Polyurethanschaum hinterschäumt.

Unter dem an sich gängigen Begriff eines Lederersatzstoffes wird dabei ein Verbund von Lederfasern beispielsweise mit PU verstanden, während Alcantara ein Verbund von Wollfasern und Baumwollfasern mit PU ist.

Bei der die Haptik, d. h. die Griffigkeit erzeugenden Zwischenschicht kann es sich um einen Polypropylen- oder Polyäthylen-Schaum in Form von Plattenware oder Rollenware handeln, welcher üblicherweise eine Stärke von 1 mm bis 5 mm aufweist. Diese Plattenware oder Rollenware kann auf das Leder oder die entsprechende Dekorschicht aufgebracht werden, und zwar entweder durch Flammkaschieren mit einer Heißluftdüse oder über eine separate Schmelzklebefolie.
Alternativ kann die sog. Haptik-Zwischenschicht durch ein Polypropylen-Polyester-Vlies (PET/PP-Vlies) gebildet sein, wofür die Leder-Dekorschicht zunächst mit einer PU-Dispersion eingespritzt und anschließend dieses sog. Haptik-Vlies unter Druck aufgeklebt wird.

Anschließend kann die Leder-Dekorschicht (oder die Lederersatzstoffschicht oder auch die Alcantara-Schicht) mit der jeweiligen Haptik-Zwischenschicht analog dem in der DE 37 22 873 C2 beschriebenen Verfahren in ein geeignetes Werkzeug eingelegt und in diesem mit der vorgewärmten Naturfaser-Thermoplast-Matte bzw. dem Natufaser-Thermoplast-Verbund in einem einzigen Arbeitsgang hinterpreßt werden. Daneben ist es möglich, den Naturfaser-Thermoplast-Verbund im sog. Niederdruckverfahren zunächst auf das Werkzeug aufzutragen, anschließend die Haptik-Zwischenschicht mit der Dekorschicht aufzulegen und diesen gesamten, dann aus zumindest drei Schichten bestehenden Verbund im wesentlichen in einem einzigen Arbeitsgang zu (hinter)pressen.

Vorteilhafterweise enthält ein derart hergestelltes Fahrzeug-Innenausstattungsteil keine schädlichen Kleberschichten, wobei ein weiterer Vorteil darin liegt, daß das Formen, Pressen und Stanzen dieses Innenausstattungsteiles in einem einzigen Arbeitsgang bzw. einem einzigen Arbeitshub erfolgen kann. Die Dekorschicht mit der Haptik-Zwischenschicht wird somit zusammen mit der aus dem Naturfaser-Thermoplast-Verbund bestehenden Trägerschicht nicht nur im geeigneten Formwerkzeug vereint, sondern auch geeignet geformt und ggf. gestanzt. Dies vereinfacht den Herstellvorgang erheblich, wobei noch darauf hingewiesen sei, daß sich ein derartiges Fahrzeug-Innenausstattungsteil durch eine extrem hohe Wärmeformbeständigkeit auszeichnet.

## Patentansprüche

1. Aus zumindest einer Trägerschicht, einer Haptik-Zwischenschicht sowie einer Dekorschicht bestehendes Fahrzeug-Innenausstattungsteil, welches durch Hinterpressen oder Hinterprägen in einem im wesentlichen einzigen Arbeitsgang hergestellt wird,
dadurch gekennzeichnet, daß die Trägerschicht aus einem Naturfaser-Thermoplast-Verbund besteht und die Dekorschicht durch Leder oder durch einen Lederersatzstoff oder durch Alcantara gebildet ist.

2. Fahrzeug-Innenausstattungsteil nach Anspruch 1,
dadurch gekennzeichnet, daß die Haptik-Zwischenschicht durch einen Polypropylen- oder Polyäthylen-Schaum in Form von Plattenware oder Rollenware gebildet ist.

3. Fahrzeug-Innenausstattungsteil nach Anspruch 1,
dadurch gekennzeichnet, daß die Haptik-Zwischenschicht durch ein PET/PP-Vlies gebildet ist.
